(19) **Europäisches Patentamt European Patent Office Office européen des brevets**

(11) **EP 4 250 185 B1**

(12) **EUROPEAN PATENT SPECIFICATION**

(45) Date of publication and mention of the grant of the patent:
**12.11.2025 Bulletin 2025/46**

(21) Application number: **20962461.8**

(22) Date of filing: **20.11.2020**

(51) International Patent Classification (IPC):
***G06N 10/60*** *(2022.01)*       ***G06N 10/20*** *(2022.01)*

(52) Cooperative Patent Classification (CPC):
**G06N 5/01; G06N 10/20; G06N 10/60**

(86) International application number:
**PCT/JP2020/043304**

(87) International publication number:
**WO 2022/107298 (27.05.2022 Gazette 2022/21)**

(54) **QUANTUM CALCULATION CONTROL PROGRAM, QUANTUM CALCULATION CONTROL METHOD, AND INFORMATION PROCESSING DEVICE**

QUANTENBERECHNUNGSSTEUERPROGRAMM, QUANTENBERECHNUNGSSTEUERVERFAHREN UND INFORMATIONSVERARBEITUNGSVORRICHTUNG

PROGRAMME DE COMMANDE DE CALCUL QUANTIQUE, PROCÉDÉ DE COMMANDE DE CALCUL QUANTIQUE ET DISPOSITIF DE TRAITEMENT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.09.2023 Bulletin 2023/39**

(73) Proprietor: **FUJITSU LIMITED Kawasaki-shi, Kanagawa 211-8588 (JP)**

(72) Inventor: **MORITA, Mikio Kawasaki-shi, Kanagawa 211-8588 (JP)**

(74) Representative: **Haseltine Lake Kempner LLP Cheapside House 138 Cheapside London EC2V 6BJ (GB)**

(56) References cited:
CA-A1- 3 137 475       US-A1- 2018 096 085
US-A1- 2020 057 957       US-A1- 2020 057 957

• DAOCHEN WANG ET AL: "Accelerated Variational Quantum Eigensolver", ARXIV.ORG, CORNELL UNIVERSITY LIBRARY, 201 OLIN LIBRARY CORNELL UNIVERSITY ITHACA, NY 14853, 1 February 2018 (2018-02-01), XP081127547
• LEO ZHOU; SHENG-TAO WANG; SOONWON CHOI; HANNES PICHLER; MIKHAIL D. LUKIN: "Quantum Approximate Optimization Algorithm: Performance, Mechanism, and Implementation on Near-Term Devices", ARXIV.ORG, CORNELL UNIVERSITY LIBRARY, 201 OLIN LIBRARY CORNELL UNIVERSITY ITHACA, NY 14853, 3 December 2018 (2018-12-03), 201 Olin Library Cornell University Ithaca, NY 14853 , XP081556381

**Description**

FIELD

The present invention relates to a quantum calculation control program, a quantum calculation control method, and an information processing device.

BACKGROUND

A noisy intermediate-scale quantum computer (NISQ) has been proposed as a medium-scale quantum computer (the number of quantum bits is about several hundreds) that does not have an error-correcting function, instead of a quantum computer having an error-correcting function, which is thought to take a long time to be put into practical use. NISQ is believed to be feasible within a few years to a decade or so.

One of the use applications of NISQ is quantum chemical calculations (see Patent Document 1, for example). Quantum chemical calculations are calculations to obtain information regarding the properties of molecules and substances in a system, by solving the Schrödinger equation, $H|\psi> = E|\psi>$. A Hamiltonian is denoted by H and is defined by interatomic distances, intermolecular distances, and the like. The quantum state of the system is denoted by $|\psi>$ and is sometimes called the state vector (or simply the state). The energy of the system is denoted by E.

Calculation of the above Schrödinger equation can be considered as calculation of an eigenvalue problem. In other words, finding the eigenvalue (energy) and the corresponding eigenvector (state vector) corresponds to solving the Schrödinger equation. Since most systems are in the lowest energy state, quantum chemical calculations often search for the lowest energy (ground energy) and the quantum state (ground state) corresponding to the lowest energy (ground energy).

The variational quantum eigensolver (VQE) is known as an algorithm for searching for such ground energy and ground state using both of a quantum computer and a classical computer. In VQE, $\theta$, which is an optimization variable (a variable used for quantum gate manipulation) set in the quantum computer, is varied, the classical computer calculates the energy based on the quantum states obtained for each $\theta$, and the ground energy and the ground state are searched for.

CITATION LIST: PATENT DOCUMENT

Patent Document 1: International Publication Pamphlet No. WO 2012/023563

Patent Document 2: Japanese Laid-open Patent Publication No. 2010-271755

Patent Document 3: Japanese National Publication of International Patent Application No. 2013-513875 Reference may be made to CA 3 137 475 A1, which relates to a system in which a quantum computer executes a quantum calculation using VQE in accordance with a Hamiltonian and initial information output from a classical computer and generates a parameter representing a first quantum circuit, the classical computer then generates a parameter representing a second quantum circuit that includes a rotation gate in accordance with the parameter representing the first quantum circuit, the quantum computer then executes a quantum calculation based on the parameter representing the second quantum circuit and outputs a quantum calculation measurement result, and the classical computer calculates a derivative of the energy corresponding to the Hamiltonian in accordance with the measurement result, the Hamiltonian, and a derivative of the Hamiltonian and outputs the derivative of the energy.

Furthermore, reference may also be made to US 2018/096085 A1, which proposes a method to simulate a large quantum system by dividing it into smaller fragments using Density Matrix Embedding Theory. The simulation is executed on a hybrid computer system where a classical processor manages the overall problem, while multiple unentangled quantum processor units work in parallel to solve the models for the individual fragments.

SUMMARY

[TECHNICAL PROBLEM]

However, in quantum calculations such as quantum chemical calculations as described above, many iterative calculations are performed for each calculation condition ($\theta$ in the case of the above example) in order to obtain calculation results with the demanded calculation accuracy. Therefore, there is a problem that long calculation time is taken.

In one aspect, the present invention aims to reduce calculation time in quantum calculations.

[SOLUTION TO PROBLEM]

The present invention is defined by the independent claims, to which reference should now be made. Specific embodiments are defined in the dependent claims. In one form of embodiment, a quantum calculation control program is provided. The quantum calculation control program causes a computer to execute a process of causing a first quantum calculator among a plurality of quantum calculators that calculate a quantum state of a system subject to calculation to repeat calculations of the quantum state under a first calculation condition a first number of times. In addition, the quantum calculation control program causes the computer to execute a process of calculating first energy of the system, based on calculation results of the first quantum calculator for a second number of times less than the first number of times, and information on the system. Then, the quantum calculation control program causes the computer to execute a process of causing a second quantum calculator among the plurality of quantum calculators to start the calculations of the quantum state under a second calculation condition designated based on the first energy, during the calculations under the first calculation condition.

In addition, in one form of embodiment, a quantum calculation control method is provided.

In addition, in one form of embodiment, an information processing device is provided.

According to an aspect of the embodiments, a quantum calculation control program that causes a computer to execute a process, the process includes causing a first quantum calculator among a plurality of quantum calculators that calculate a quantum state of a system subject to calculation to repeat calculations of the quantum state under a first calculation condition a first number of times; calculating first energy of the system, based on calculation results of the first quantum calculator for a second number of times less than the first number of times, and the information; and causing a second quantum calculator among the plurality of quantum calculators to start the calculations of the quantum state under a second calculation condition designated based on the first energy, during the calculations under the first calculation condition.

[ADVANTAGEOUS EFFECTS OF INVENTION]

In one aspect, the present invention may reduce calculation time in quantum calculations.

The above-described object and other objects, features, and advantages of the present invention will become clear from the following description related to the appended drawings, which represents preferred embodiments as examples of the present invention.

BRIEF DESCRIPTION OF DRAWINGS

FIG. 1 is a diagram illustrating an example of a quantum calculation control method and an information processing device according to a first embodiment;
FIG. 2 is a block diagram illustrating a hardware example of the information processing device;
FIG. 3 is a block diagram illustrating a functional example of the information processing device;
FIG. 4 is a flowchart illustrating an example of the processing procedure of the quantum calculation control method (part 1);
FIG. 5 is a flowchart illustrating an example of the processing procedure of the quantum calculation control method (part 2);
FIG. 6 is a flowchart illustrating an example of the processing procedure of the quantum calculation control method (part 3);
FIG. 7 is a flowchart illustrating a processing procedure of a quantum calculation control method of a comparative example;
FIG. 8 is a diagram illustrating an exemplary relationship between the number of iterations of calculations and the energy calculation accuracy (part 1);
FIG. 9 is a diagram illustrating an exemplary relationship between the number of iterations of calculations and the energy calculation accuracy (part 2);
FIG. 10 is a diagram illustrating the difference in processing time of the quantum calculation control methods between a second embodiment and the comparative example; and
FIG. 11 is a diagram illustrating an example of simulation results.

DESCRIPTION OF EMBODIMENTS

Hereinafter, modes for carrying out the invention will be described with reference to the drawings.

**EP 4 250 185 B1**

(First Embodiment)

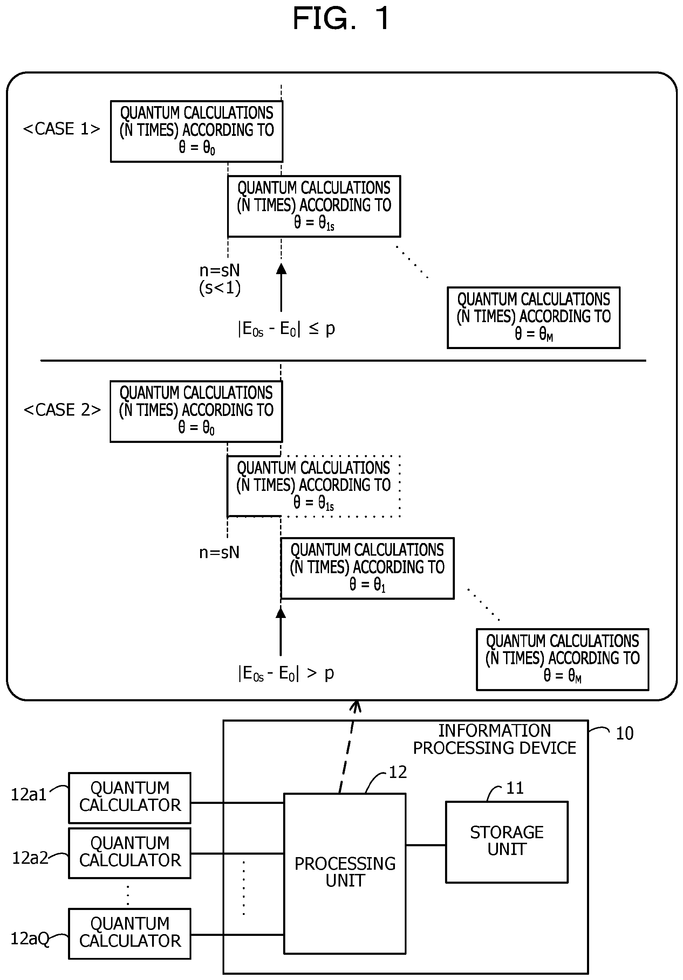

FIG. 1 is a diagram illustrating an example of a quantum calculation control method and an information processing device according to a first embodiment.

An information processing device 10 of the first embodiment controls a plurality of quantum calculators 12a1, 12a2, ..., and 12aQ to calculate (search for) the ground energy and the ground state of a system.

For example, for the quantum calculators 12a1 to 12aQ, a variety of quantum calculators can be applied, such as those based on superconducting quantum bits and those using diamond color centers as quantum bits.

Each of the quantum calculators 12a1 to 12aQ calculates the quantum state of the system subject to calculation, according to the calculation conditions set by the information processing device 10. For example, each of the quantum calculators 12a1 to 12aQ performs predetermined quantum calculations (quantum manipulations) on a plurality of quantum bits according to the set calculation condition. The values of the plurality of quantum bits measured after quantum calculations are treated as the quantum states of the system as calculation results. The system subject to calculation is a system including a plurality of atoms or molecules when quantum chemical calculations are performed as quantum calculations.

When quantum calculations by VQE are performed, the energy of the system is represented by following formula (1).

[Mathematical Formula 1]

$$E = \frac{\langle \psi(\vec{\theta}) | \, H \, | \psi(\vec{\theta}) \rangle}{\langle \psi(\vec{\theta}) | \psi(\vec{\theta}) \rangle} \qquad (1)$$

In formula (1), $\theta$ (expressed as a vector) denotes an optimization variable and represents calculation conditions for the quantum calculators 12a1 to 12aQ. For example, a parameter that defines the angle of quantum manipulation (spin rotation manipulation) for the quantum bit is denoted by $\theta$. The quantum state of the system obtained by quantum manipulation is indicated by $\psi(\theta)$. A Hamiltonian is denoted by H. In quantum chemical calculations, the Hamiltonian reflects the magnitude of the Coulomb interaction between electron atoms and the Coulomb interaction between electrons and is defined by interatomic distances or intermolecular distances (hereinafter referred to as R) or the like. The quantum state that minimizes the energy when $\theta$ and R are varied is the ground state (or a state close to the ground state) desired to be found, and the energy at that time is the ground energy (or energy close to the ground energy).

The information processing device 10 includes a storage unit 11 and a processing unit 12.

The storage unit 11 is a volatile storage device such as a random access memory (RAM) or a nonvolatile storage device such as a hard disk drive (HDD) or a flash memory.

The storage unit 11 stores information on the system subject to calculation used for quantum calculations. For example, the storage unit 11 stores parameters for representing the Hamiltonian of the system, information on the demanded calculation accuracy, and the like.

The processing unit 12 is achieved by a processor that is hardware such as a central processing unit (CPU) or a digital signal processor (DSP). However, the processing unit 12 may include an electronic circuit for a specific application, such as an application specific integrated circuit (ASIC) or a field programmable gate array (FPGA). The processor executes a program stored in a memory such as a RAM. For example, a quantum calculation control program is executed. Note that a set of a plurality of processors will be sometimes referred to as a "multiprocessor" or simply a "processor".

The processing unit 12 performs processes as follows.

The processing unit 12 causes a first quantum calculator among the quantum calculators 12a1 to 12aQ that calculate the quantum state of the system subject to calculation to repeat calculations of the quantum state under a first calculation condition a first number of times (hereinafter, N times). For example, the processing unit 12 sets $\theta = \theta_0$ as an example of the first calculation condition in the quantum calculator 12a1, as in FIG. 1, and causes the quantum calculator 12a1 to perform calculations of the quantum state (quantum calculations) N times.

In addition, the processing unit 12 calculates first energy of the system, based on the calculation results of the first quantum calculator for a second number of times (hereinafter, sN times) less than the N times, and information on the system (information on the Hamiltonian). The speculative execution ratio is denoted by s and has a value less than one. For example, the processing unit 12 calculates the energy as follows, based on the quantum states (quantum states for the sN times) obtained by each quantum calculation when causing the quantum calculator 12a1 to perform quantum calculations according to $\theta = \theta_0$ sN times.

In formula (1), H can be represented as formula (2) below.

[Mathematical Formula 2]

4

$$H = \sum_i h_i O_i \qquad (2)$$

In formula (2), the tensor product of Pauli matrices that perform quantum manipulation is denoted by $O_i$. The Pauli matrices are also called Pauli operators and have four matrices of X, Y, Z, and I (identity matrix). The storage unit 11 stores $h_i$, which is a real number coefficient, for each R in advance. An integer from one to L is denoted by i. That is, H can be represented by the sum of L number of $h_i O_i$. For example, L is designated depending on the type of molecule and the basis function used for calculation.

The energy for certain $\theta$ can be represented as formula (3) below.

[Mathematical Formula 3]

$$E = \sum_i h_i \langle \psi(\theta)|O_i|\psi(\theta)\rangle \qquad (3)$$

Here, assuming that $p_0$ is the probability that the number of quantum bits in a state |1> in the quantum calculation per one time is an even number, and $p_1$ is the probability that the above number of quantum bits is an odd number, each of $p_0$ and $p_1$ can be represented as formula (4) below.

[Mathematical Formula 4]

$$p_0 = \frac{1 + \langle \psi(\theta)|O_i|\psi(\theta)\rangle}{2}, p_1 = \frac{1 - \langle \psi(\theta)|O_i|\psi(\theta)\rangle}{2} \qquad (4)$$

That is, <ψ(θ)|O_i|ψ(θ)> can be represented, for example, as formula (5) below.

[Mathematical Formula 5]

$$\langle \psi(\theta)|O_i|\psi(\theta)\rangle = 2p_0 - 1 \qquad (5)$$

When $p_0$ for the measurement of the tensor product $O_i$ is replaced with $p_{i0}$, formula (3) can be represented as formula (6) below.

[Mathematical Formula 6]

$$E = \sum_i h_i (2p_{i0} - 1) \qquad (6)$$

That is, E can be worked out by finding $p_{i0}$. Note that E can also be calculated by finding $p_1$ that the number of quantum bits in the state |1> is an odd number.

The processing unit 12 calculates $p_{i0}$ based on the calculation results for the number of calculations of sN times (n = sN) and uses $p_{i0}$ to calculate $E_{0s}$, which is an example of the first energy, as E from formula (6).

Furthermore, during the quantum calculations by the first quantum calculator, the processing unit 12 also causes a second quantum calculator among the quantum calculators 12a1 to 12aQ to start quantum calculations under a second calculation condition designated based on the first energy. For example, the processing unit 12 causes the quantum calculator 12a2 to start quantum calculations under $\theta = \theta_{1s}$, which is an example of the second calculation condition designated based on the calculated $E_{0s}$, during quantum calculations by the quantum calculator 12a1.

Based on $E_{0s}$, for example, the processing unit 12 uses simultaneous perturbation stochastic approximation, sequential quadratic programming, or the like to designate $\theta_{1s}$ such that the energy becomes smaller.

In addition, the processing unit 12 calculates second energy of the system, based on the calculation results of the first quantum calculator for the N times and information on the system (information on the Hamiltonian). For example, the processing unit 12 calculates above $p_{i0}$ based on the calculation results for the N times (quantum states for the N times) by the quantum calculator 12a1 and uses $p_{i0}$ to calculate $E_0$, which is an example of the second energy, as E from formula (6). Since $E_0$ is energy obtained based on the results of more quantum calculations than $E_{0s}$, the calculation accuracy of $E_0$ is higher than the calculation accuracy of $E_{0s}$.

Then, the processing unit 12 designates whether or not to cause the second quantum calculator to execute quantum calculations under a third calculation condition different from the second calculation condition, according to whether or not the difference between the first energy and the second energy is equal to or less than a predetermined value (p).

For example, when $|E_{0s} - E_0|$, which is the difference between $E_{0s}$ and $E_0$, is equal to or less than p, in other words, when $|E_{0s} - E_0| \leq p$ is met (case 1 in FIG. 1), the processing unit 12 causes the quantum calculator 12a2 to continue quantum calculations under the second calculation condition ($\theta = \theta_{1s}$). For example, the final demanded calculation accuracy input by a user is denoted by p. When quantum chemical calculations are performed, for example, $1.6 \times 10^{-3}$ hartree is used as p.

On the other hand, when $|E_{0s} - E_0|$ is greater than p, in other words, when $|E_{0s} - E_0| > p$ is met (case 2 in FIG. 1), the processing unit 12 causes the quantum calculator 12a2 to execute quantum calculations under the third calculation condition. In this case, in the quantum calculator 12a2, quantum calculations under the second calculation condition are suspended, and quantum calculations under the third calculation condition ($\theta = \theta_1$) are started. The third calculation condition is designated by a method similar to the above method for the second calculation condition, based on the second energy.

The processing unit 12 repeats the processes as described above for other calculation conditions. The energy obtained by such processes converges toward the ground energy. The processing unit 12 outputs, for example, the energy of the system obtained after quantum calculations have been executed for predetermined types of calculation conditions, and the applied calculation condition ($\theta$), as a calculation result (search result). In the example in FIG. 1, the last applied calculation condition is denoted by $\theta = \theta_M$. Note that, when quantum chemical calculations are performed, each R is processed as described above.

The processing unit 12 may output the calculation result to a display device (not illustrated) for display, or may output the calculation result to a device external to the information processing device 10. In addition, the processing unit 12 may store the calculation result in the storage unit 11.

Note that, when a predetermined convergence condition (for example, the energy fluctuation amount is within a predetermined range) is satisfied, the processing unit 12 may terminate the process without causing quantum calculations to be executed under a new calculation condition.

In the quantum calculation control method of the first embodiment as described above, the information processing device 10 causes the first quantum calculator to repeatedly calculate the quantum state of the system under the first calculation condition and causes the second quantum calculator to start the calculations under the second calculation condition based on the first energy obtained during the calculations of the first quantum calculator. This ensures quantum calculations to be performed in parallel under a plurality of calculation conditions and thereby reduces the calculation time.

In addition, the information processing device 10 calculates the second energy of the system, based on the quantum state obtained by calculations for the N times by the first quantum calculator, and the information on the system. Then, when the difference between the first energy and the second energy is greater than p, the information processing device 10 causes the second quantum calculator to suspend quantum calculations under the second calculation condition and start quantum calculations under the third calculation condition designated based on the second energy. As described above, since $E_0$, which is an example of the second energy, is energy obtained based on the results of more quantum calculations than $E_{0s}$, which is an example of the first energy, the calculation accuracy of $E_0$ is higher than the calculation accuracy of $E_{0s}$. Therefore, by performing quantum calculations under the third calculation condition designated based on the second energy, degradation in calculation accuracy may be suppressed.

The above processing is a kind of speculative processing (hereinafter referred to as speculative processing), but differs from existing speculative processing in the following points.

In the existing speculative processing, the result of the processing in the previous stage is referred to as an input as a verification material for the speculative processing. For example, when a certain branching process (if statement) has often been determined to be true so far, the process is speculatively performed on the supposition that the certain branching process will be true this time as well.

In contrast to this, in the quantum calculation control method of the first embodiment described above, the input (calculation condition) for the next stage of iterative calculations is obtained from the result obtained during the iterative calculations under a certain calculation condition. In VQE, the calculation accuracy is on the order of $1/\sqrt{n}$ with respect to a variable n indicating the number of calculations of iterative calculations, and as for the results obtained during iterative calculations, correct results to some extent are often obtained. Therefore, such speculative processing is acceptable.

Note that the smaller the speculative execution ratio s, the more quantum calculators are used, and the number of parallel calculations increases accordingly, and it is expected that the calculation time will be further reduced.

(Second Embodiment)

Next, a second embodiment will be described.

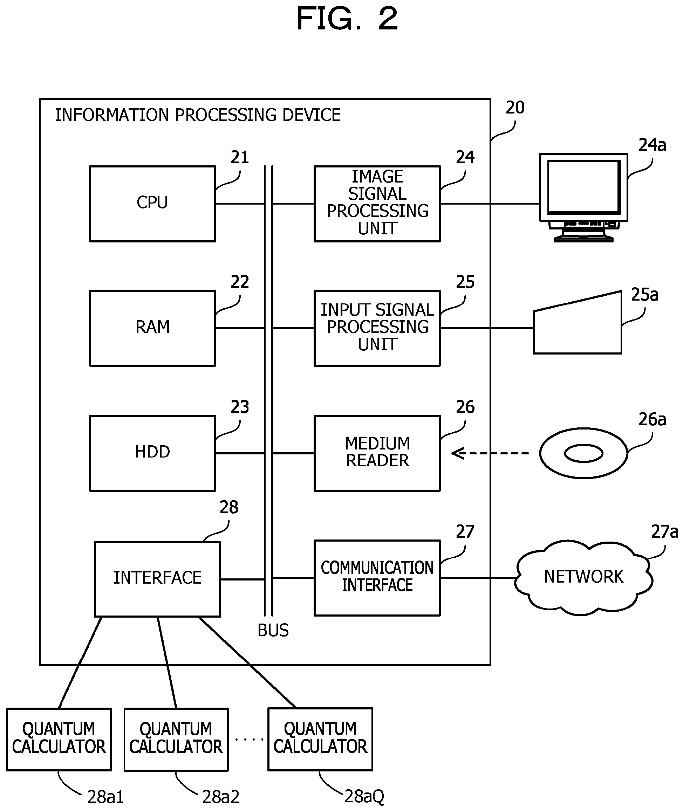

FIG. 2 is a block diagram illustrating a hardware example of the information processing device.

An information processing device 20 includes a CPU 21, a RAM 22, an HDD 23, an image signal processing unit 24, an input signal processing unit 25, a medium reader 26, a communication interface 27, and an interface 28. The units described above are coupled to a bus.

The CPU 21 is a processor including an arithmetic circuit that executes program commands. The CPU 21 loads at least a part of a program and data stored in the HDD 23 into the RAM 22 to execute the program. Note that the CPU 21 may include a plurality of processor cores, the information processing device 20 may include a plurality of processors, and processes described below may be executed in parallel using the plurality of processors or processor cores. In addition, a set of a plurality of processors (multiprocessor) may be called a "processor".

The RAM 22 is a volatile semiconductor memory that temporarily stores a program executed by the CPU 21 and data used by the CPU 21 for arithmetic operations. Note that the information processing device 20 may include a memory of a type other than the RAM and may include a plurality of memories.

The HDD 23 is a nonvolatile storage device that stores programs for software such as an operating system (OS), middleware, or application software and data. The programs include, for example, the quantum calculation control program that controls quantum calculations. Note that the information processing device 20 may include another type of storage device such as a flash memory or a solid state drive (SSD) and may include a plurality of nonvolatile storage devices.

The image signal processing unit 24 outputs an image to a display 24a coupled to the information processing device 20 in accordance with a command from the CPU 21. As the display 24a, a cathode ray tube (CRT) display, a liquid crystal display (LCD), a plasma display panel (PDP), an organic electro-luminescence (OEL) display, or the like can be used.

The input signal processing unit 25 acquires an input signal from an input device 25a coupled to the information processing device 20 and outputs the acquired input signal to the CPU 21. As the input device 25a, a pointing device such as a mouse, a touch panel, a touch pad, or a trackball, a keyboard, a remote controller, a button switch, or the like can be used. In addition, a plurality of types of input devices may be coupled to the information processing device 20.

The medium reader 26 is a reading device that reads a program and data recorded on a recording medium 26a. As the recording medium 26a, for example, a magnetic disk, an optical disc, a magneto-optical disk (MO), a semiconductor memory, or the like can be used. The magnetic disk includes a flexible disk (FD) and an HDD. The optical disc includes a compact disc (CD) and a digital versatile disc (DVD).

The medium reader 26 copies, for example, a program or data read from the recording medium 26a to another recording medium such as the RAM 22 or the HDD 23. The read program is executed by, for example, the CPU 21. Note that the recording medium 26a may be a portable recording medium and is sometimes used for distribution of a program or data. In addition, the recording medium 26a and the HDD 23 will be sometimes referred to as computer-readable recording media.

The communication interface 27 is an interface that is coupled to a network 27a and communicates with another information processing device via the network 27a. The communication interface 27 may be a wired communication interface coupled by a cable to a communication device such as a switch, or may be a wireless communication interface coupled to a base station by a wireless link.

The interface 28 communicates with quantum calculators 28a1, 28a2, ..., and 28aQ. The interface 28, for example, transmits various calculation conditions and control signals to the quantum calculators 28a1 to 28aQ and receives quantum calculation results (quantum states) by the quantum calculators 28a1 to 28aQ.

Next, functions and processing procedures of the information processing device 20 will be described.

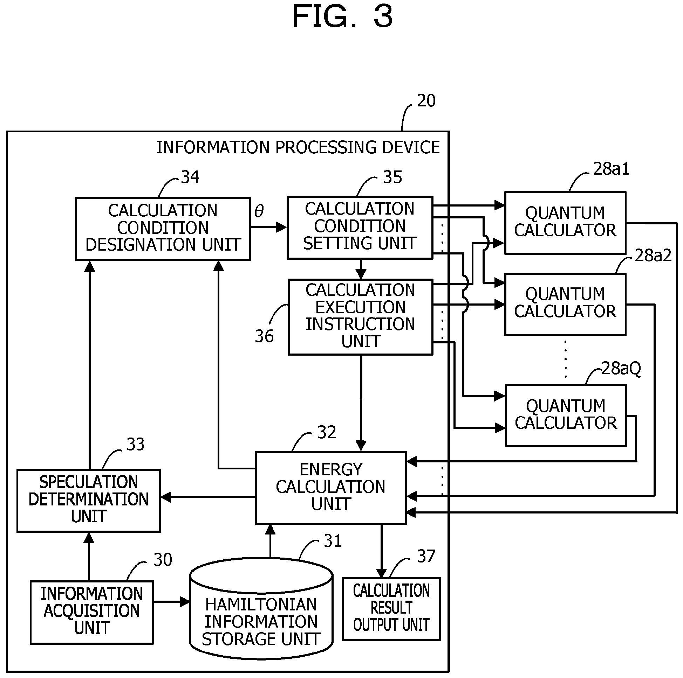

FIG. 3 is a block diagram illustrating a functional example of the information processing device.

The information processing device 20 includes an information acquisition unit 30, a Hamiltonian information storage unit 31, an energy calculation unit 32, a speculation determination unit 33, a calculation condition designation unit 34, a calculation condition setting unit 35, a calculation execution instruction unit 36, and a calculation result output unit 37. The Hamiltonian information storage unit 31 can be implemented using, for example, a storage area reserved in the RAM 22 or the HDD 23. The information acquisition unit 30, the energy calculation unit 32, the speculation determination unit 33, the calculation condition designation unit 34, the calculation condition setting unit 35, the calculation execution instruction unit 36, and the calculation result output unit 37 can be implemented using program modules executed by the CPU 21, for example.

The information acquisition unit 30 acquires the calculation accuracy (aforementioned p) input by the user, for example, operating the input device 25a, and information on the Hamiltonian (aforementioned $h_i$ illustrated in formula (2)), which is the information on the system subject to calculation.

The Hamiltonian information storage unit 31 stores the information on the Hamiltonian acquired by the information acquisition unit 30.

The energy calculation unit 32 calculates the energy of the system by aforementioned formula (6), based on the quantum states of the system calculated by the quantum calculators 28a1 to 28aQ, and the information on the Hamiltonian. The energy calculation unit 32 calculates the energy based on the quantum calculation results for the sN (s < 1) times or the quantum calculation results for the N times under a certain calculation condition. The current number of calculations is notified by the calculation execution instruction unit 36. Note that the energy calculation unit 32 may calculate the energy based on the quantum calculation results up to that point when the number of calculations is other than n = sN or n = N.

The speculation determination unit 33 determines whether or not the difference between the energy calculated based on the quantum calculation results for the sN times and the energy calculated based on the quantum calculation results for the N times is equal to or less than p. For example, the calculation accuracy acquired by the information acquisition unit 30 is denoted by p.

Based on the energy calculated by the energy calculation unit 32 and the determination result of the speculation determination unit 33, the calculation condition designation unit 34 designates $\theta$ representing the calculation conditions for the quantum calculators 28a1 to 28aQ. For example, the calculation condition designation unit 34 uses simultaneous perturbation stochastic approximation, sequential quadratic programming, or the like to designate $\theta$ such that the energy becomes smaller.

The calculation condition setting unit 35 sets $\theta$ designated by the calculation condition designation unit 34 in a quantum calculator that is not currently executing calculations among the quantum calculators 28a1 to 28aQ.

The calculation execution instruction unit 36 instructs the quantum calculator in which $\theta$ is set by the calculation condition setting unit 35 to execute calculations.

The calculation result output unit 37 outputs, for example, the energy of the system obtained after quantum calculations have been executed for predetermined types of calculation conditions, and the applied calculation condition ($\theta$), as a calculation result (search result). The calculation result output unit 37 may output the calculation result to the display 24a for display, or may transmit the calculation result to another information processing device via the network 27a. In addition, the calculation result output unit 37 may store the calculation result in a storage device such as the HDD 23.

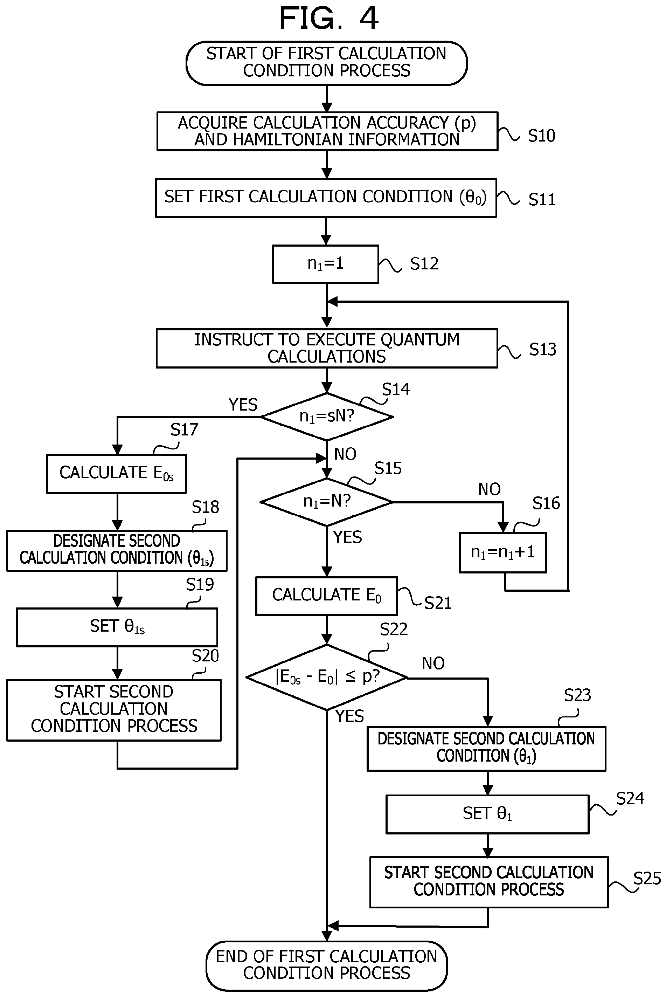

FIGs. 4, 5, and 6 are flowcharts illustrating an example of the processing procedure of the quantum calculation control method. FIG. 4 illustrates an example of control when the quantum calculator is caused to perform quantum calculations under the first calculation condition.

First, the information acquisition unit 30 acquires the calculation accuracy (p) input by the user, for example, operating the input device 25a, and the information on the Hamiltonian (step S10).

The calculation condition setting unit 35 sets $\theta_0$, which is the initial value of $\theta$, as the first calculation condition in one of the quantum calculators 28a1 to 28aQ (step S11).

The calculation execution instruction unit 36 initializes a variable $n_1$ indicating the number of iterations of quantum calculations under the first calculation condition to one (step S12) and instructs the quantum calculator in which $\theta_0$ is set to execute quantum calculations (step S13). This ensures that the quantum calculation for one time according to $\theta_0$ is executed.

The calculation execution instruction unit 36 determines whether or not $n_1$ = sN is met (step S14). When determining that $n_1$ = sN is not met, the calculation execution instruction unit 36 determines whether or not $n_1$ = N is met (step S15).

When determining that $n_1$ = N is not met, the calculation execution instruction unit 36 sets $n_1 = n_1 + 1$ (step S16) and repeats the process from step S13.

When the calculation execution instruction unit 36 determines that $n_1$ = sN is met in the process in step S14, the energy calculation unit 32 calculates $E_{0s}$ by aforementioned formula (6) (step S17). The energy calculation unit 32 calculates the probability ($p_{i0}$) that the number of quantum bits in the state |1> in the aforementioned quantum calculation per one time is an even number, for example, based on the quantum calculation results for $n_1$ = sN times, and uses $p_{i0}$ to calculate $E_{0s}$ as E in formula (6).

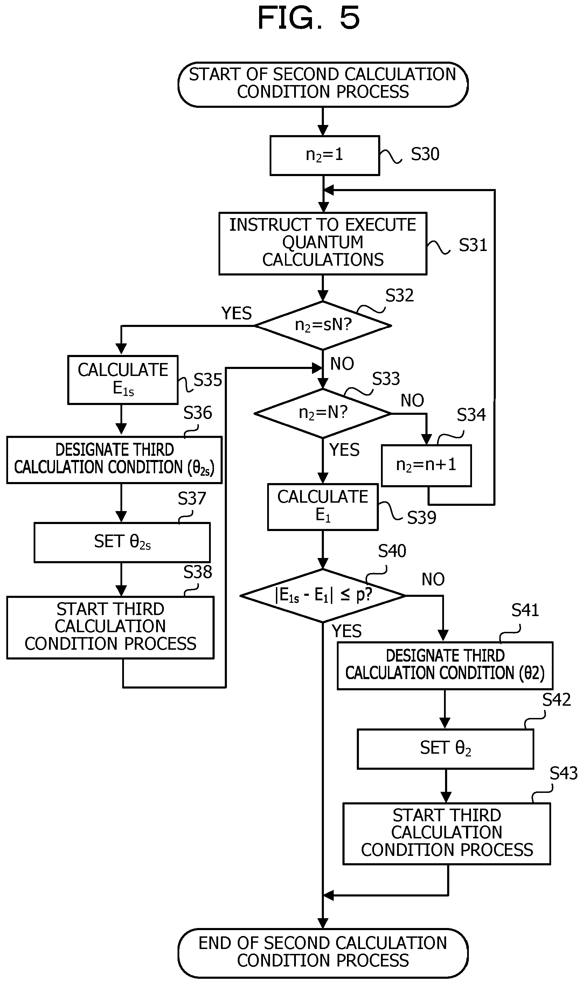

After the process in step S17, the calculation condition designation unit 34 designates $\theta_{1s}$ as the second calculation condition, based on $E_{0s}$ (step S18). Then, the calculation condition setting unit 35 sets $\theta_{1s}$ in a quantum calculator that is not currently executing calculations among the quantum calculators 28a1 to 28aQ (step S19). Thereafter, although the process of the second calculation condition illustrated in FIG. 5 is started (step S20), the process of the first calculation condition is continued, and the process from step S15 is repeated.

When the calculation execution instruction unit 36 determines that $n_1$ = N is met in the process in step S15, the energy calculation unit 32 calculates $E_0$ by aforementioned formula (6) (step S21). The energy calculation unit 32 calculates $p_{i0}$ based on the quantum calculation results for $n_1$ = N times and uses $p_{i0}$ to calculate $E_0$ as E in formula (6).

After the process in step S21, the speculation determination unit 33 determines whether or not $|E_{0s} - E_0|$, which is the difference between $E_{0s}$ and $E_0$, is equal to or less than p (step S22).

When the speculation determination unit 33 determines that $|E_{0s} - E_0|$ is not equal to or less than p, the calculation condition designation unit 34 designates $\theta_1$ to be used as the second calculation condition instead of aforementioned $\theta_{1s}$, based on $E_0$ (step S23). Then, the calculation condition setting unit 35 sets $\theta_1$ instead of $\theta_{1s}$ in the quantum calculator in which $\theta_{1s}$ has been set (step S24). Thereafter, the process of the second calculation condition is started (step S25).

When the speculation determination unit 33 determines that $|E_{0s} - E_0|$ is equal to or less than p in the process in step S22, or after the process in step S25, the process of the first calculation condition ends.

FIG. 5 illustrates an example of control when the quantum calculator is caused to perform calculations under the second calculation condition.

The calculation execution instruction unit 36 initializes a variable $n_2$ indicating the number of iterations of quantum calculations under the second calculation condition to one (step S30) and instructs the quantum calculator in which $\theta_1$ or $\theta_{1s}$ is set to execute quantum calculations (step S31). This ensures that the quantum calculation for one time according to $\theta_1$ or $\theta_{1s}$ is executed.

The calculation execution instruction unit 36 determines whether or not $n_2 = sN$ is met (step S32). When determining that $n_2 = sN$ is not met, the calculation execution instruction unit 36 determines whether or not $n_2 = N$ is met (step S33).

When determining that $n_2 = N$ is not met, the calculation execution instruction unit 36 sets $n_2 = n_2 + 1$ (step S34) and repeats the process from step S31.

When the calculation execution instruction unit 36 determines that $n_2 = sN$ is met in the process in step S32, the energy calculation unit 32 calculates $E_{1s}$ by aforementioned formula (6) (step S35). The energy calculation unit 32 calculates aforementioned $p_{i0}$ based on the quantum calculation results for $n_2 = sN$ times according to $\theta_1$ or $\theta_{1s}$ and uses $p_{i0}$ to calculate $E_{1s}$ as E in formula (6).

After the process in step S35, the calculation condition designation unit 34 designates $\theta_{2s}$ as the third calculation condition, based on $E_{1s}$ (step S36). Then, the calculation condition setting unit 35 sets $\theta_{2s}$ in a quantum calculator that is not currently executing calculations among the quantum calculators 28a1 to 28aQ (step S37). Thereafter, although the process of the third calculation condition is started (step S38), the process of the second calculation condition is continued, and the process from step S33 is repeated.

When the calculation execution instruction unit 36 determines that $n_2 = N$ is met in the process in step S33, the energy calculation unit 32 calculates $E_1$ by aforementioned formula (6) (step S39). The energy calculation unit 32 calculates $p_{i0}$ based on the quantum calculation results for $n_2 = N$ times and uses $p_{i0}$ to calculate $E_1$ as E in formula (6).

After the process in step S39, the speculation determination unit 33 determines whether or not $|E_{1s} - E_1|$, which is the difference between $E_{1s}$ and $E_1$, is equal to or less than p (step S40).

When the speculation determination unit 33 determines that $|E_{1s} - E_1|$ is not equal to or less than p, the calculation condition designation unit 34 designates $\theta_2$ to be used as the third calculation condition instead of aforementioned $\theta_{2s}$, based on $E_1$ (step S41). Then, the calculation condition setting unit 35 sets $\theta_2$ instead of $\theta_{2s}$ in the quantum calculator in which $\theta_{2s}$ has been set (step S42). Thereafter, the process of the third calculation condition is started (step S43).

When the speculation determination unit 33 determines that $|E_{1s} - E_1|$ is equal to or less than p in the process in step S40, or after the process in step S43, the process of the second calculation condition ends.

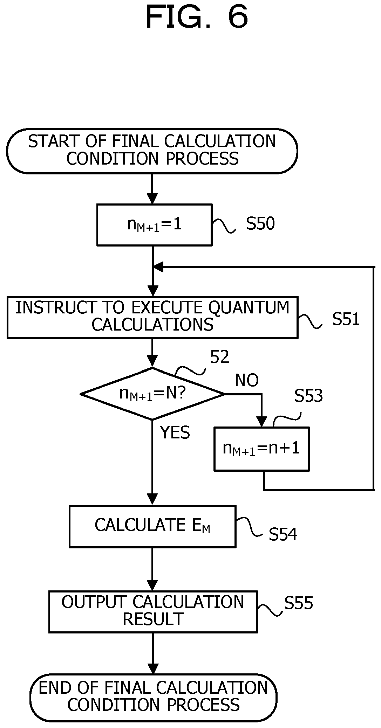

The process after the third calculation condition is also performed similarly to the process in FIG. 5. However, regarding the final calculation condition, for example, the process as illustrated in FIG. 6 is performed.

FIG. 6 illustrates an example of control when the quantum calculator is caused to perform calculations under the final calculation condition. When M + 1 types of calculation conditions ($\theta_0$ to $\theta_M$) are used, the final calculation condition is $\theta_M$.

The calculation execution instruction unit 36 initializes a variable $n_{M+1}$ indicating the number of iterations of quantum calculations under the final calculation condition to one (step S50) and instructs the quantum calculator in which $\theta_M$ or $\theta_{Ms}$ is set to execute quantum calculations (step S51). This ensures that the quantum calculation for one time according to $\theta_M$ or $\theta_{Ms}$ is executed.

The calculation execution instruction unit 36 determines whether or not $n_{M+1} = N$ is met (step S52). When determining that $n_{M+1} = N$ is not met, the calculation execution instruction unit 36 sets $n_{M+1} = n_{M+1} + 1$ (step S53) and repeats the process from step S51.

When the calculation execution instruction unit 36 determines that $n_{M+1} = N$ is met in the process in step S52, the energy calculation unit 32 calculates $E_M$ by aforementioned formula (6) (step S54). The energy calculation unit 32 calculates $p_{i0}$ based on the quantum calculation results for $n_{M+1} = N$ times according to $\theta_M$ or $\theta_{Ms}$ and uses $p_{i0}$ to calculate $E_M$ as E in formula (6).

After the process in step S54, the calculation result output unit 37 outputs the calculation result (step S55). This completes the process of the final calculation condition. The calculation result output unit 37, for example, outputs the applied calculation condition ($\theta_M$ or $\theta_{Ms}$) as the calculation result, as well as $E_M$ calculated in the process in step S54.

Note that, when quantum chemical calculations are performed, the process as described above is performed for each of aforementioned R, which are interatomic distances or intermolecular distances.

Note that the orders of processes illustrated in FIGs. 4 to 6 are examples, and the orders of processes may be appropriately changed.

Before describing the effects of the above quantum calculation control method, the following comparative example will be described in which the processes for each calculation condition are performed not speculatively but in series.

(Comparative Example)

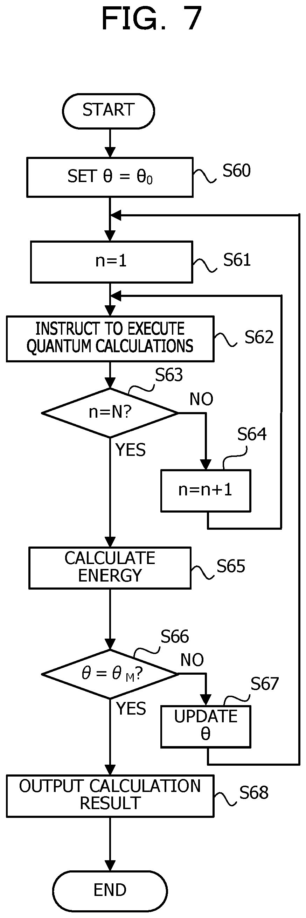

FIG. 7 is a flowchart illustrating a processing procedure of a quantum calculation control method of the comparative example.

In a quantum calculation control process of the comparative example, first, $\theta_0$, which is the initial value of $\theta$, which is a calculation condition, is set in a quantum calculator (step S60), a variable n indicating the number of iterations of quantum calculations is initialized to one (step S61), and the quantum calculator is instructed to execute quantum calculations (step S62). This ensures that the quantum calculation for one time is executed.

Thereafter, it is determined whether or not n = N is met (step S63), and when it is determined that n = N is not met, n = n + 1 is set (step S64), and the process from step S62 is repeated.

When it is determined that n = N is met, E represented by formula (6) is calculated based on the quantum calculation results for n = N times (step S65). Thereafter, it is determined whether or not the calculation condition is the final calculation condition ($\theta = \theta_M$ in the example in FIG. 7) (step S66).

When it is determined that the calculation condition is not the final calculation condition, $\theta$ is updated based on E calculated in the process in step S65 (step S67), the process from step S61 is repeated, and the process of a new calculation condition is performed.

In the process in step S66, when it is determined that the calculation condition is the final calculation condition, the calculation result is output (step S68), and the quantum calculation control process ends.

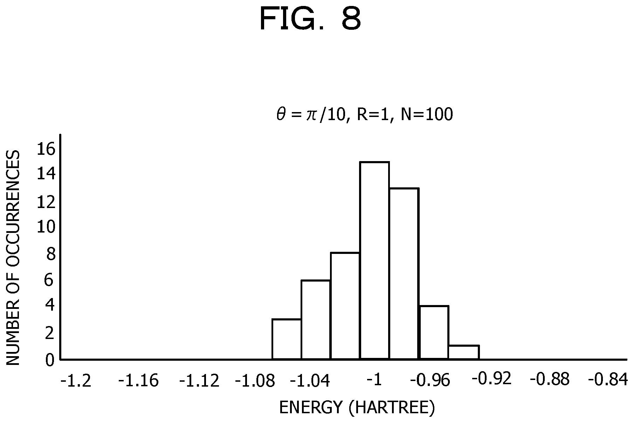

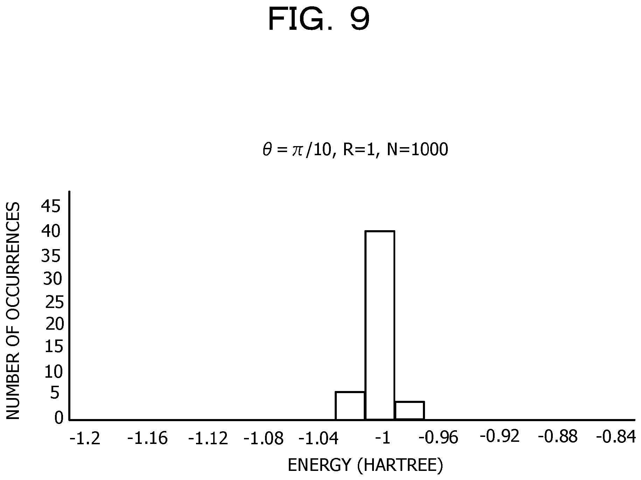

FIGs. 8 and 9 are diagrams illustrating an exemplary relationship between the number of iterations of calculations and the energy calculation accuracy. FIGs. 8 and 9 illustrate an example in which the energy of a hydrogen molecule when $\theta = n/10$ is used as a calculation condition and R, which is the intermolecular distance, is set to one was calculated by simulation. In FIG. 8, N, which is the number of iterations, is assumed as 100, and in FIG. 9, N is assumed as 1000. The horizontal axis indicates the energy (in units of hartree), and the vertical axis indicates the calculated number of occurrences of each energy.

As in FIG. 8, in the case of N = 100, a large error occurs with respect to the known correct answer (energy = -0.99 hartree) under the above calculation conditions. As in FIG. 9, when N = 1000 is employed, the error becomes smaller.

It is known that N = 20000 or so is employed in order to obtain a calculation result with an energy standard deviation of $1.6 \times 10^{-3}$ hartree, which is an example of the accuracy demanded in quantum chemical calculations.

Since the process of each calculation condition is repeated many times as described above, when the aforementioned quantum calculation control method of the comparative example, in which the processes under a plurality of calculation conditions are performed in series, is applied, the calculation time will become longer.

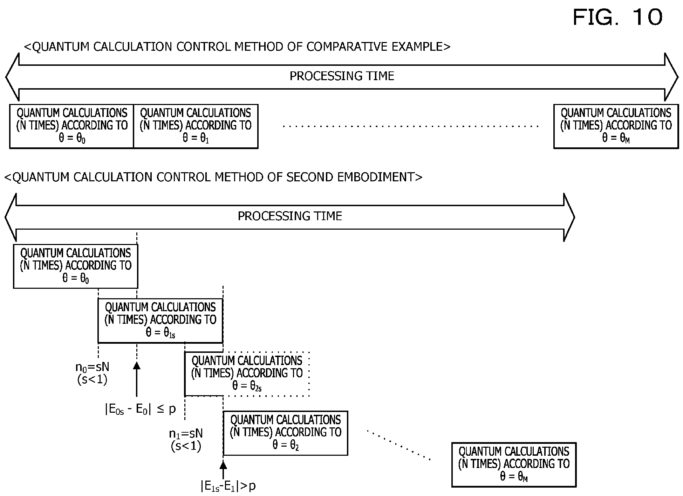

FIG. 10 is a diagram illustrating the difference in processing time of the quantum calculation control methods between the second embodiment and the comparative example. The example in FIG. 10 illustrates examples of control each for causing quantum calculations to be performed according to M + 1 types of calculation conditions.

In the quantum calculation control method of the comparative example, quantum calculations according to each of $\theta = \theta_0$ to $\theta_M$, which represents M + 1 types of calculation conditions, are performed N times in series.

In contrast to this, in the quantum calculation control method of the second embodiment, the speculative processing is performed. In the example in FIG. 10, quantum calculations according to $\theta = \theta_{1s}$ are started during quantum calculations for the N times according to $\theta = \theta_0$ (when $n_0 = sN$ is met). In addition, since $|E_{0s} - E_0|$ is equal to or less than p when $n_0 = N$ is met, quantum calculations according to $\theta = \theta_{1s}$ are continued.

Furthermore, during quantum calculations for the N times according to $\theta = \theta_{1s}$ (when $n_1 = sN$ is met), quantum calculations according to $\theta = \theta_{2s}$ are started. In the example in FIG. 10, since $|E_{1s} - E_1|$ is greater than p when $n_1 = N$ is met, quantum calculations according to $\theta = \theta_{2s}$ are suspended, and quantum calculations according to $\theta = \theta_2$ are started.

In the quantum calculation control method of the second embodiment, if the case where $|E_{is} - E_i| \leq p$ (i is an integer from zero to M) is met (the case where speculation is successful) occurs even once, the processing time until quantum calculations under the final calculation condition ($\theta = \theta_M$) is finished may be reduced compared with the quantum calculation control method of the comparative example.

(Example of Simulation Results)

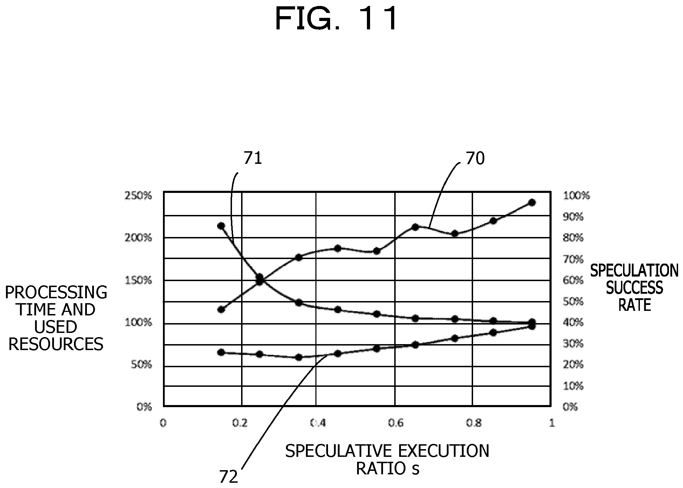

FIG. 11 is a diagram illustrating an example of simulation results. The horizontal axis represents the speculative execution ratio s, the left vertical axis represents the processing time and used resources when the speculative execution ratio s = 1 is assumed to be 100% (the number of quantum calculators $\times$ quantum calculation execution time), and the right vertical axis represents the speculation success rate.

Note that, for simplicity of calculation, FIG. 11 illustrates a calculation example when N = 100 and p = 0.1 are assumed, and $\theta$ is not designated from the energy but defined in advance as $\theta_0 = 0 \times n/10$, $\theta_1 = 1 \times n/10$, ..., and $\theta_9 = 9 \times n/10$.

A simulation result 70 indicates the speculation success rate with respect to the speculative execution ratio s (the percentage that it is determined that $|E_{is} - E_i| \leq p$ is met), and a simulation result 71 indicates the used resources with respect to the speculative execution ratio s. A simulation result 72 indicates the processing time with respect to the speculative execution ratio s.

When the speculative execution ratio s is made smaller, the used resources indicated by the simulation result 71 increases due to a decrease in the speculation success rate indicated by the simulation result 70. However, as in the simulation result 72, it can be seen that the processing time tends to be shortened when the speculative execution ratio s is made smaller.

Note that, as mentioned above, the processing contents described above can be achieved by causing the information processing device 20 to execute a program.

The program can be recorded in a computer-readable recording medium (such as the recording medium 26a). As the recording medium, for example, a magnetic disk, an optical disc, a magneto-optical disk, a semiconductor memory, or the like can be used. The magnetic disk includes an FD and an HDD. The optical disc includes a CD, a CD-recordable (R)/rewritable (RW), a DVD, and a DVD-R/RW. The program is sometimes recorded in a portable recording medium and distributed. In that case, the program may be copied from the portable recording medium to another recording medium (such as the HDD 23) and then executed.

The above description merely indicates the principle of the present invention. Furthermore, numerous modifications and alterations can be made by those skilled in the art. The present invention is not limited to the exact configuration and application examples illustrated and described above.

REFERENCE SIGNS LIST

| | |
|---|---|
| 10 | Information processing device |
| 11 | Storage unit |
| 12 | Processing unit |
| 12a1 to 12aQ | Quantum calculator |

**Claims**

1. A quantum calculation control program that causes a computer to execute a process, the process comprising:

   causing (S13) a first quantum calculator among a plurality of quantum calculators that calculate a quantum state of a system to repeat calculation of the quantum state under a first calculation condition a first number of times;
   acquiring (S17) first energy of the system, based on information of the system and a result of the calculation of the first quantum calculator for a second number of times less than the first number of times;
   causing (S20) a second quantum calculator among the plurality of quantum calculators to start calculation of the quantum state under a second calculation condition determined based on the first energy, during the calculation under the first calculation condition, to perform the calculation of the quantum state in parallel under a plurality of calculation conditions including the first calculation condition by the first quantum calculator and the second calculation condition by the second quantum calculator;
   acquiring (S21) second energy of the system, based on the information and a result of the calculation of the first quantum calculator for the second number of times;
   when a difference between the first energy and the second energy is equal to or less than a predetermined value, causing the second quantum calculator to continue the calculation under the second calculation condition until a number of calculations reaches the first number of times; and
   when the difference is greater than the predetermined value, causing the second quantum calculator to suspend the calculation under the second calculation condition and to start calculation under a third calculation condition determined based on the second energy.

2. The quantum calculation control program according to claim 1, wherein the predetermined value is calculation accuracy.

3. A quantum calculation control method for a computer to execute a process comprising:

   causing (S13) a first quantum calculator among a plurality of quantum calculators that calculate a quantum state of a system to repeat calculation of the quantum state under a first calculation condition a first number of times;
   acquiring (S17) first energy of the system, based on information of the system and a result of the calculation of the first quantum calculator for a second number of times less than the first number of times;

causing (S20) a second quantum calculator among the plurality of quantum calculators to start calculation of the quantum state under a second calculation condition determined based on the first energy, during the calculation under the first calculation condition, to perform the calculation of the quantum state in parallel under a plurality of calculation conditions including the first calculation condition by the first quantum calculator and the second calculation condition by the second quantum calculator;

acquiring (S21) second energy of the system, based on the information and a result of the calculation of the first quantum calculator for the second number of times;

when a difference between the first energy and the second energy is equal to or less than a predetermined value, causing the second quantum calculator to continue the calculation under the second calculation condition until a number of calculations reaches the first number of times; and

when the difference is greater than the predetermined value, causing the second quantum calculator to suspend the calculation under the second calculation condition and to start calculation under a third calculation condition determined based on the second energy.

4. The quantum calculation control method according to claim 3, wherein the predetermined value is calculation accuracy.

5. An information processing device (10) comprising:
a processing unit (12) configured to:

cause a first quantum calculator (12a1-12aQ) among a plurality of quantum calculators (12a1-12aQ) that calculate a quantum state of a system to repeat calculation of the quantum state under a first calculation condition a first number of times,

acquire first energy of the system, based on information of the system and a result of the calculation of the first quantum calculator for a second number of times less than the first number of times,

cause a second quantum calculator (12a1-12aQ) among the plurality of quantum calculators (12a1-12aQ) to start calculation of the quantum state under a second calculation condition determined based on the first energy, during the calculation under the first calculation condition, to perform the calculation of the quantum state in parallel under a plurality of calculation conditions including the first calculation condition by the first quantum calculator and the second calculation condition by the second quantum calculator,

acquire second energy of the system, based on the information and a result of the calculation of the first quantum calculator for the second number of times,

when a difference between the first energy and the second energy is equal to or less than a predetermined value, cause the second quantum calculator to continue the calculation under the second calculation condition until a number of calculations reaches the first number of times, and

when the difference is greater than the predetermined value, cause the second quantum calculator to suspend the calculation under the second calculation condition and to start calculation under a third calculation condition determined based on the second energy.

6. The information processing device (10) according to claim 5, wherein the predetermined value is calculation accuracy.

**Patentansprüche**

1. Quantenberechnungssteuerprogramm, das einen Computer veranlasst, einen Prozess auszuführen, der Prozess umfassend:

Veranlassen (S13) eines ersten Quantenrechners unter einer Vielzahl von Quantenrechnern, die einen Quantenzustand eines Systems berechnen, eine Berechnung des Quantenzustands unter einer ersten Berechnungsbedingung eine erste Anzahl von Malen zu wiederholen;

Erfassen (S17) einer ersten Energie des Systems auf der Grundlage von Informationen über das System und eines Ergebnisses der Berechnung des ersten Quantenrechners für eine zweite Anzahl von Malen, die kleiner ist als die erste Anzahl von Malen;

Veranlassen (S20) eines zweiten Quantenrechners unter der Vielzahl von Quantenrechnern, die Berechnung des Quantenzustands unter einer zweiten Berechnungsbedingung, die auf der Grundlage der ersten Energie bestimmt wird, während der Berechnung unter der ersten Berechnungsbedingung zu beginnen, um die Berechnung des Quantenzustands parallel unter einer Vielzahl von Berechnungsbedingungen einschließlich der ersten Berechnungsbedingung durch den ersten Quantenrechner und der zweiten Berechnungsbedingung durch den zweiten Quantenrechner durchzuführen;

Erfassen (S21) einer zweiten Energie des Systems auf der Grundlage von Informationen und eines Ergebnisses der Berechnung des ersten Quantenrechners für die zweite Anzahl von Malen;

wenn eine Differenz zwischen der ersten Energie und der zweiten Energie gleich oder kleiner als ein vorbestimmter Wert ist, Veranlassen des zweiten Quantenrechners, die Berechnung unter der zweiten Berechnungsbedingung fortzusetzen, bis eine Anzahl von Berechnungen die erste Anzahl von Malen erreicht; und

wenn die Differenz größer als der vorbestimmte Wert ist, Veranlassen des zweiten Quantenrechners, die Berechnung unter der zweiten Berechnungsbedingung auszusetzen und die Berechnung unter einer dritten Berechnungsbedingung zu beginnen, die auf der Grundlage der zweiten Energie bestimmt wird.

2.  Quantenberechnungssteuerprogramm nach Anspruch 1, wobei der vorbestimmte Wert eine Rechengenauigkeit ist.

3.  Quantenberechnungssteuerverfahren, für einen Computer zur Ausführung eines Prozesses, umfassend:

Veranlassen (S13) eines ersten Quantenrechners unter einer Vielzahl von Quantenrechnern, die einen Quantenzustand eines Systems berechnen, die Berechnung des Quantenzustands unter einer ersten Berechnungsbedingung eine erste Anzahl von Malen zu wiederholen;

Erfassen (S17) einer ersten Energie des Systems auf der Grundlage von Informationen über das System und eines Ergebnisses der Berechnung des ersten Quantenrechners für eine zweite Anzahl von Malen, die kleiner ist als die erste Anzahl von Malen;

Veranlassen (S20) eines zweiten Quantenrechners unter der Vielzahl von Quantenrechnern, die Berechnung des Quantenzustands unter einer zweiten Berechnungsbedingung, die auf der Grundlage der ersten Energie bestimmt wird, während der Berechnung unter der ersten Berechnungsbedingung zu beginnen, um die Berechnung des Quantenzustands parallel unter einer Vielzahl von Berechnungsbedingungen einschließlich der ersten Berechnungsbedingung durch den ersten Quantenrechner und der zweiten Berechnungsbedingung durch den zweiten Quantenrechner durchzuführen;

Erfassen (S21) einer zweiten Energie des Systems auf der Grundlage von Informationen und eines Ergebnisses der Berechnung des ersten Quantenrechners für die zweite Anzahl von Malen;

wenn eine Differenz zwischen der ersten Energie und der zweiten Energie gleich oder kleiner als ein vorbestimmter Wert ist, Veranlassen des zweiten Quantenrechners, die Berechnung unter der zweiten Berechnungsbedingung fortzusetzen, bis eine Anzahl von Berechnungen die erste Anzahl von Malen erreicht; und

wenn die Differenz größer als der vorbestimmte Wert ist, Veranlassen des zweiten Quantenrechners, die Berechnung unter der zweiten Berechnungsbedingung auszusetzen und die Berechnung unter einer dritten Berechnungsbedingung zu beginnen, die auf der Grundlage der zweiten Energie bestimmt wird.

4.  Quantenberechnungssteuerverfahren nach Anspruch 3, wobei der vorbestimmte Wert die Rechengenauigkeit ist.

5.  Informationsverarbeitungsvorrichtung (10), umfassend:
eine Verarbeitungseinheit (12), die konfiguriert ist, um:

einen ersten Quantenrechner (12a1-12aQ) unter einer Vielzahl von Quantenrechnern (12a1-12aQ), die einen Quantenzustand eines Systems berechnen, zu veranlassen, die Berechnung des Quantenzustands unter einer ersten Berechnungsbedingung eine erste Anzahl von Malen zu wiederholen,

eine erste Energie des Systems auf der Grundlage von Informationen über das System und eines Ergebnisses der Berechnung des ersten Quantenrechners für eine zweite Anzahl von Malen, die kleiner ist als die erste Anzahl von Malen, zu erfassen,

einen zweiten Quantenrechner (12a1-12aQ) unter der Vielzahl von Quantenrechnern (12a1-12aQ) zu veranlassen, die Berechnung des Quantenzustands unter einer zweiten Berechnungsbedingung, die auf der Grundlage der ersten Energie bestimmt wird, während der Berechnung unter der ersten Berechnungsbedingung zu beginnen, um die Berechnung des Quantenzustands parallel unter einer Vielzahl von Berechnungsbedingungen einschließlich der ersten Berechnungsbedingung durch den ersten Quantenrechner und der zweiten Berechnungsbedingung durch den zweiten Quantenrechner durchzuführen,

eine zweite Energie des Systems auf der Grundlage von Informationen und eines Ergebnisses der Berechnung des ersten Quantenrechners für die zweite Anzahl von Malen zu erfassen,

wenn eine Differenz zwischen der ersten Energie und der zweiten Energie gleich oder kleiner als ein vorbestimmter Wert ist, den zweiten Quantenrechner zu veranlassen, die Berechnung unter der zweiten Berechnungsbedingung fortzusetzen, bis eine Anzahl von Berechnungen die erste Anzahl von Malen erreicht, und

wenn die Differenz größer als der vorbestimmte Wert ist, den zweiten Quantenrechner zu veranlassen, die Berechnung unter der zweiten Berechnungsbedingung auszusetzen und die Berechnung unter einer dritten Berechnungsbedingung zu beginnen, die auf der Grundlage der zweiten Energie bestimmt wird.

6. Informationsverarbeitungsvorrichtung (10) nach Anspruch 5, wobei der vorbestimmte Wert die Rechengenauigkeit ist.

**Revendications**

1. Programme de commande de calcul quantique qui amène un ordinateur à exécuter un processus, le processus comprenant :

le fait d'amener (S13) un premier calculateur quantique parmi une pluralité de calculateurs quantiques qui calculent un état quantique d'un système à répéter le calcul de l'état quantique dans une première condition de calcul un premier nombre de fois ; l'acquisition (S17) d'une première énergie du système, sur la base d'informations du système et d'un résultat du calcul du premier calculateur quantique pour un second nombre de fois inférieur au premier nombre de fois ;
le fait d'amener (S20) un second calculateur quantique parmi la pluralité de calculateurs quantiques à démarrer le calcul de l'état quantique dans une deuxième condition de calcul déterminée sur la base de la première énergie, pendant le calcul dans la première condition de calcul, pour réaliser le calcul de l'état quantique en parallèle dans une pluralité de conditions de calcul comportant la première condition de calcul par le premier calculateur quantique et la deuxième condition de calcul par le second calculateur quantique ;
l'acquisition (S21) d'une seconde énergie du système, sur la base des informations et d'un résultat du calcul du premier calculateur quantique pour le second nombre de fois ;
lorsqu'une différence entre la première énergie et la seconde énergie est inférieure ou égale à une valeur prédéterminée, le fait d'amener le second calculateur quantique à poursuivre le calcul dans la deuxième condition de calcul jusqu'à ce qu'un nombre de calculs atteigne le premier nombre de fois ; et
lorsque la différence est supérieure à la valeur prédéterminée, le fait d'amener le second calculateur quantique à suspendre le calcul dans la deuxième condition de calcul et à démarrer le calcul dans une troisième condition de calcul déterminée sur la base de la seconde énergie.

2. Programme de commande de calcul quantique selon la revendication 1, dans lequel la valeur prédéterminée est une précision de calcul.

3. Procédé de commande de calcul quantique pour qu'un ordinateur exécute un processus comprenant :

le fait d'amener (S13) un premier calculateur quantique parmi une pluralité de calculateurs quantiques qui calculent un état quantique d'un système à répéter le calcul de l'état quantique dans une première condition de calcul un premier nombre de fois ; l'acquisition (S17) d'une première énergie du système, sur la base d'informations du système et d'un résultat du calcul du premier calculateur quantique pour un second nombre de fois inférieur au premier nombre de fois ;
le fait d'amener (S20) un second calculateur quantique parmi la pluralité de calculateurs quantiques à démarrer le calcul de l'état quantique dans une deuxième condition de calcul déterminée sur la base de la première énergie, pendant le calcul dans la première condition de calcul, pour réaliser le calcul de l'état quantique en parallèle dans une pluralité de conditions de calcul comportant la première condition de calcul par le premier calculateur quantique et la deuxième condition de calcul par le second calculateur quantique ;
l'acquisition (S21) d'une seconde énergie du système, sur la base des informations et d'un résultat du calcul du premier calculateur quantique pour le second nombre de fois ;
lorsqu'une différence entre la première énergie et la seconde énergie est inférieure ou égale à une valeur prédéterminée, le fait d'amener le second calculateur quantique à poursuivre le calcul dans la deuxième condition de calcul jusqu'à ce qu'un nombre de calculs atteigne le premier nombre de fois ; et
lorsque la différence est supérieure à la valeur prédéterminée, le fait d'amener le second calculateur quantique à suspendre le calcul dans la deuxième condition de calcul et à démarrer le calcul dans une troisième condition de calcul déterminée sur la base de la seconde énergie.

4. Procédé de commande de calcul quantique selon la revendication 3, dans lequel la valeur prédéterminée est une précision de calcul.

**5.** Dispositif de traitement d'informations (10) comprenant :
une unité de traitement (12) configurée pour :

amener un premier calculateur quantique (12a1-12aQ) parmi une pluralité de calculateurs quantiques (12a1-12aQ) qui calculent un état quantique d'un système à répéter le calcul de l'état quantique dans une première condition de calcul un premier nombre de fois,

acquérir une première énergie du système, sur la base d'informations du système et d'un résultat du calcul du premier calculateur quantique pour un second nombre de fois inférieur au premier nombre de fois,

amener un second calculateur quantique (12a1-12aQ) parmi la pluralité de calculateurs quantiques (12a1-12aQ) à démarrer le calcul de l'état quantique dans une deuxième condition de calcul déterminée sur la base de la première énergie, pendant le calcul dans la première condition de calcul, pour réaliser le calcul de l'état quantique en parallèle dans une pluralité de conditions de calcul comportant la première condition de calcul par le premier calculateur quantique et la deuxième condition de calcul par le second calculateur quantique,

acquérir une seconde énergie du système, sur la base des informations et d'un résultat du calcul du premier calculateur quantique pour le second nombre de fois ;

lorsqu'une différence entre la première énergie et la seconde énergie est inférieure ou égale à une valeur prédéterminée, amener le second calculateur quantique à continuer le calcul dans la deuxième condition de calcul jusqu'à ce qu'un nombre de calculs atteigne le premier nombre de fois, et

lorsque la différence est supérieure à la valeur prédéterminée, amener le second calculateur quantique à suspendre le calcul dans la deuxième condition de calcul et à démarrer le calcul dans une troisième condition de calcul déterminée sur la base de la seconde énergie.

**6.** Dispositif de traitement d'informations (10) selon la revendication 5, dans lequel la valeur prédéterminée est une précision de calcul.

# FIG. 1

<CASE 1>

QUANTUM CALCULATIONS
(N TIMES) ACCORDING TO
$\theta = \theta_0$

QUANTUM CALCULATIONS
(N TIMES) ACCORDING TO
$\theta = \theta_{1s}$

$n=sN$
$(s<1)$

$|E_{0s} - E_0| \leq p$

QUANTUM CALCULATIONS
(N TIMES) ACCORDING TO
$\theta = \theta_M$

<CASE 2>

QUANTUM CALCULATIONS
(N TIMES) ACCORDING TO
$\theta = \theta_0$

QUANTUM CALCULATIONS
(N TIMES) ACCORDING TO
$\theta = \theta_{1s}$

$n=sN$

QUANTUM CALCULATIONS
(N TIMES) ACCORDING TO
$\theta = \theta_1$

$|E_{0s} - E_0| > p$

QUANTUM CALCULATIONS
(N TIMES) ACCORDING TO
$\theta = \theta_M$

INFORMATION
PROCESSING DEVICE  10

12

11

12a1  QUANTUM
CALCULATOR

12a2  QUANTUM
CALCULATOR

PROCESSING
UNIT

STORAGE
UNIT

12aQ  QUANTUM
CALCULATOR

# FIG. 2

INFORMATION PROCESSING DEVICE    20

CPU    21

IMAGE SIGNAL PROCESSING UNIT    24

24a

RAM    22

INPUT SIGNAL PROCESSING UNIT    25

25a

HDD    23

MEDIUM READER    26

26a

INTERFACE    28

COMMUNICATION INTERFACE    27

NETWORK    27a

BUS

QUANTUM CALCULATOR    28a1

QUANTUM CALCULATOR    28a2

. . . .

QUANTUM CALCULATOR    28aQ

# FIG. 3

INFORMATION PROCESSING DEVICE 20

34 — CALCULATION CONDITION DESIGNATION UNIT

$\theta$

35 — CALCULATION CONDITION SETTING UNIT

28a1 — QUANTUM CALCULATOR

36 — CALCULATION EXECUTION INSTRUCTION UNIT

28a2 — QUANTUM CALCULATOR

28aQ — QUANTUM CALCULATOR

33 — SPECULATION DETERMINATION UNIT

32 — ENERGY CALCULATION UNIT

30 — INFORMATION ACQUISITION UNIT

31 — HAMILTONIAN INFORMATION STORAGE UNIT

37 — CALCULATION RESULT OUTPUT UNIT

# FIG. 4

START OF FIRST CALCULATION
CONDITION PROCESS

ACQUIRE CALCULATION ACCURACY (p)
AND HAMILTONIAN INFORMATION — S10

SET FIRST CALCULATION CONDITION ($\theta_0$) — S11

$n_1 = 1$ — S12

INSTRUCT TO EXECUTE QUANTUM
CALCULATIONS — S13

$n_1 = sN?$ — S14

YES

CALCULATE $E_{0s}$ — S17

DESIGNATE SECOND
CALCULATION CONDITION ($\theta_{1s}$) — S18

SET $\theta_{1s}$ — S19

START SECOND
CALCULATION
CONDITION PROCESS — S20

NO

$n_1 = N?$ — S15

NO

$n_1 = n_1 + 1$ — S16

YES

CALCULATE $E_0$ — S21

$|E_{0s} - E_0| \leq p?$ — S22

NO

DESIGNATE SECOND CALCULATION
CONDITION ($\theta_1$) — S23

SET $\theta_1$ — S24

START SECOND CALCULATION
CONDITION PROCESS — S25

YES

END OF FIRST CALCULATION
CONDITION PROCESS

# FIG. 5

START OF SECOND CALCULATION
CONDITION PROCESS

$n_2 = 1$ — S30

INSTRUCT TO EXECUTE
QUANTUM
CALCULATIONS — S31

S32

YES ← $n_2 = sN?$ → NO

CALCULATE
$E_{1s}$ — S35

$n_2 = N?$ — S33 → NO

S36

DESIGNATE THIRD
CALCULATION CONDITION ($\theta_{2s}$)

YES

$n_2 = n+1$ — S34

CALCULATE
$E_1$ — S39

S37

SET $\theta_{2s}$

S38

START THIRD
CALCULATION
CONDITION PROCESS

S40

$|E_{1s} - E_1| \leq p?$ → NO

YES

DESIGNATE THIRD
CALCULATION CONDITION ($\theta2$) — S41

SET $\theta_2$ — S42

START THIRD
CALCULATION
CONDITION PROCESS — S43

END OF SECOND CALCULATION
CONDITION PROCESS

# FIG. 6

START OF FINAL CALCULATION
CONDITION PROCESS

$n_{M+1}=1$ — S50

INSTRUCT TO EXECUTE QUANTUM
CALCULATIONS — S51

52

$n_{M+1}=N?$ — NO — S53

YES

$n_{M+1}=n+1$

CALCULATE $E_M$ — S54

OUTPUT CALCULATION
RESULT — S55

END OF FINAL CALCULATION
CONDITION PROCESS

...

# FIG. 7

START

SET $\theta = \theta_0$ — S60

n=1 — S61

INSTRUCT TO EXECUTE
QUANTUM CALCULATIONS — S62

S63

n=N? — NO

YES

S64

n=n+1

CALCULATE
ENERGY — S65

S66

$\theta = \theta_M$? — NO

YES

S67

UPDATE
$\theta$

OUTPUT CALCULATION
RESULT — S68

END

# FIG. 8

$\theta = \pi/10$, R=1, N=100

# FIG. 9

$\theta = \pi/10$, R=1, N=1000

FIG. 10

<QUANTUM CALCULATION CONTROL METHOD OF COMPARATIVE EXAMPLE>

PROCESSING TIME

QUANTUM CALCULATIONS (N TIMES) ACCORDING TO $\theta = \theta_0$ | QUANTUM CALCULATIONS (N TIMES) ACCORDING TO $\theta = \theta_1$ · · · · · · · · · · · · · · · · · QUANTUM CALCULATIONS (N TIMES) ACCORDING TO $\theta = \theta_M$

<QUANTUM CALCULATION CONTROL METHOD OF SECOND EMBODIMENT>

PROCESSING TIME

QUANTUM CALCULATIONS (N TIMES) ACCORDING TO $\theta = \theta_0$

QUANTUM CALCULATIONS (N TIMES) ACCORDING TO $\theta = \theta_{1s}$

$n_0 = sN$ (s<1)

$|E_{0s} - E_0| \leq p$

QUANTUM CALCULATIONS (N TIMES) ACCORDING TO $\theta = \theta_{2s}$

$n_1 = sN$ (s<1)

QUANTUM CALCULATIONS (N TIMES) ACCORDING TO $\theta = \theta_2$

$|E_{1s} - E_1| > p$

QUANTUM CALCULATIONS (N TIMES) ACCORDING TO $\theta = \theta_M$

# FIG. 11

**EP 4 250 185 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012023563 A
- JP 2010271755 A
- JP 2013513875 A
- CA 3137475 A1
- US 2018096085 A1